# EUROPEAN PATENT SPECIFICATION

(11) **EP 3 184 378 B1**
(45) Date of publication and mention of the grant of the patent: **09.05.2018**
(21) Application number: 16205633.7
(22) Date of filing: 21.12.2016
(51) Int. Cl.: B60R 22/48

(54) **BUCKLE AND IN-VEHICLE SYSTEM**
SCHNALLE UND FAHRZEUGSYSTEM
BOUCLE ET SYSTÈME POUR VÉHICULES

(30) Priority: 24.12.2015 JP 2015252246
(43) Date of publication of application: 28.06.2017
(73) Proprietor: Takata Corporation, Tokyo 106-8488 (JP)
(72) Inventor: Takao, Masato, Tokyo, 106-8488 (JP)
(74) Representative: Banzer, Hans-Jörg

(56) References cited:
- WO-A1-2008/023749
- JP-A- S5 083 928
- JP-A- 2009 509 829
- JP-U- S6 173 457
- US-A1- 2008 068 149
- US-A1- 2008 143 508

## Description

### FIELD

The present disclosure relates to a buckle and an in-vehicle system.

### BACKGROUND

Conventionally, a sensor device has been known that indicates to a control unit a state of detection or non-detection of an occupant obtained by an occupant detection circuit, and a state of a seat belt buckle switch, by changing the current value of a current drawn out of the control unit (see, for example, Patent Document 1).

Also, a seat belt warning system has been known that has a fastening detection switch that is in an on state when a seat belt is unfastened, and in an off state when the seat belt is fastened, connected in series with a seating detection switch that detects a state of an occupant seated or non-seated on a seat (see, for example, Patent Document 2) .

### [Related-Art Documents]

### [Patent Documents]

[Patent Document 1] Japanese Unexamined Patent Application Publication No. 2009-509829
[Patent Document 2] Japanese Laid-open Patent Publication No. 11-70855

The technology in Patent Document 1 tends to increase the consumed current of the sensor device because the current drawn out of a control unit always flows in an occupant detection circuit even in a state of the seat belt being fastened. The technology in Patent Document 1 also tends to increase the consumed current in a state of the seat belt being fastened because the current value of the current drawn out of the control unit is higher in a "fixed" state of a seat belt buckle switch than in a "non-fixed" state of the seat belt buckle switch.

In contrast to this, the technology in Patent Document 2 can reduce the consumed current in a state of the seat belt being fastened because supplying power to the seating detection switch is cut off due to the fastening detection switch having transitioned to an off state in a state of the seat belt being fastened.

However, according to the technology in Patent Document 2, although supplying power to the seating detection switch is cut off in a state of the seat belt being fastened, the seating detection switch is in an off state if the seat belt is unfastened and an occupant is not detected. Therefore, it is not possible to distinguish a state in which the seat belt is fastened, from a state in which the seat belt is unfastened and an occupant is not detected.

Document WO2008/023749 A1 discloses: a buckle comprising: a pair of power terminals; an occupant detection unit configured to detect an occupant on a seat of a vehicle; and a switch configured to permit supplying power from the power terminals to the occupant detection unit in an unfastened state of a seat belt of the vehicle, wherein the occupant detection unit changes a current value of a current that flows in the power terminals, between a detected state in which the occupant is detected in the unfastened state, and a non-detected state in which the occupant is not detected in the unfastened state, wherein the switch inhibits supplying power from the power terminals to the occupant detection unit in a fastened state of the seat belt, to make the current value in the fastened state lower than the current value in the detected state in which the occupant is detected in the unfastened state.

Thereupon, it is an object of an embodiment to reduce the consumed current in a state in which the seat belt is fastened, and to make it possible to distinguish a state in which the seat belt is fastened, from a state in which the seat belt is unfastened and an occupant is not detected.

### SUMMARY

According to an embodiment, a buckle includes a pair of power terminals; an occupant detection unit configured to detect an occupant on a seat of a vehicle; and a switch configured to permit supplying power from the power terminals to the occupant detection unit in an unfastened state of a seat belt of the vehicle. The occupant detection unit changes a current value of a current that flows in the power terminals, between a detected state in which the occupant is detected in the unfastened state, and a non-detected state in which the occupant is not detected in the unfastened state. The switch inhibits supplying power from the power terminals to the occupant detection unit in a fastened state of the seat belt, to make the current value in the fastened state lower than the current value in the detected state, and lower than the current value in the non-detected state.

According to the embodiment, since supplying power from the pair of power terminals to the occupant detection unit is inhibited in the fastened state of the seat belt, the consumed current of the buckle can be reduced in the state of the seat belt being fastened. Also, since the current value in the fastened state is lower than the current value in the non-detected state, the consumed current of the buckle can be reduced in the state of the seat belt being fastened. Also, the current value in the fastened state being lower than the current value in the non-detected state, makes the current value in the non-detected state different from the current value in the fastened state. Therefore, it is possible to distinguish the state of the seat belt being fastened from the state in which the seat belt is unfastened and the occupant is not detected.

It is possible to reduce the consumed current in a state in which the seat belt is fastened, and to distinguish a state in which the seat belt is fastened, from a state in which the seat belt is unfastened and an occupant is not detected.

### BRIEF DESCRIPTION OF DRAWINGS

FIG. 1 is a diagram illustrating an example of a configuration of an in-vehicle system including a buckle and an electronic control unit;
FIG. 2 is a table illustrating an example of a relationship among states detected by a buckle, current values of a current flowing in a pair of power terminals, and states determined by an electronic control unit;
FIG. 3 is a diagram illustrating an example of a configuration of an in-vehicle system including a buckle and an electronic control unit;
FIG. 4 is a table illustrating an example of a relationship among states detected by a buckle, current values of a current flowing in a pair of power terminals, and states determined by an electronic control unit; and
FIG. 5 is a diagram illustrating an example of a configuration of an in-vehicle system including a buckle and an electronic control unit.

### DESCRIPTION OF EMBODIMENTS

In the following, embodiments will be described with reference to the drawings.

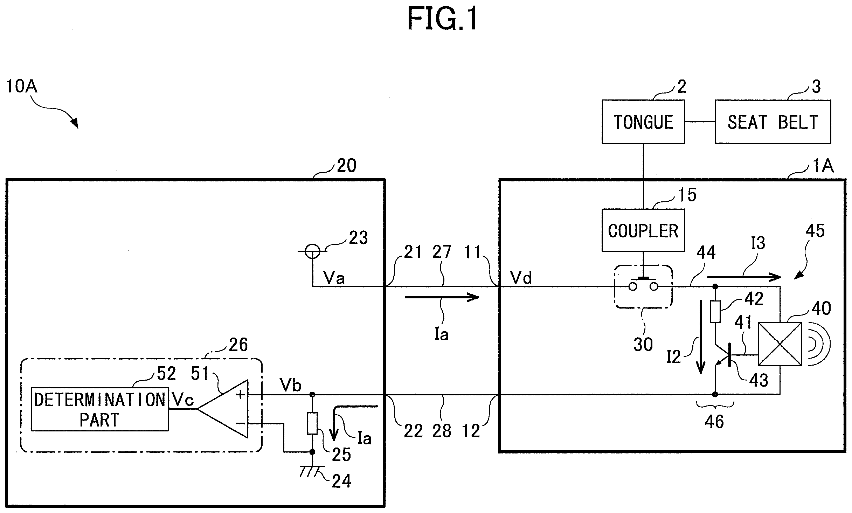

FIG. 1 is a diagram illustrating an example of a configuration of a seat belt reminder system 10A according to a first embodiment. The seat belt reminder system 10A is an example of an in-vehicle system installed on a vehicle, and includes an ECU 20 that outputs a signal to prompt an occupant to fasten a seat belt 3 if the occupant is detected as not fastening a seat belt 3 by a buckle 1A. Here, "ECU" stands for "Electronic Control Unit". The seat belt reminder system 10A includes the buckle 1A, the ECU 20, and a pair of power lines 27 and 28, and transmits and receives information between the buckle 1A and the ECU 20 via the pair of power lines 27 and 28.

The buckle 1A is a part that can be coupled and decoupled with a tongue 2, and is fixed on, for example, the floor of the vehicle body, or a seat. The tongue 2 is an example of a belt insertion member through which the seat belt 3 is inserted, and can be slid. The seat belt 3 is an example of webbing that restrains an occupant sitting on a corresponding seat of the vehicle, and is a belt-shaped member that is rewindable by a retractor.

The buckle 1A includes, for example, a pair of power terminals 11 and 12, a power supplying path 44, a coupler 15, a buckle switch 30, and an occupant detection unit 45.

The pair of power terminals 11 and 12 are terminals to which a direct-current (DC) power supply voltage Vd is applied via the pair of power lines 27 and 28. The plus terminal 11, or one of the pair of power terminals 11 and 12, is connected with one end of the plus power line 27. The minus terminal 12, or the other one of the pair of power terminals 11 and 12, is connected with one end of the minus power line 28. The plus terminal 11 is connected with a current output terminal 21 of the ECU 20 via the plus power line 27, and the minus terminal 12 is connected with a current input terminal 22 of the ECU 20 via the minus power line 28.

The power supplying path 44 is an example of a current path that forms a connection from the plus terminal 11 down to the minus terminal 12. If the buckle switch 30 is detecting a state of the seat belt 3 being unfastened, the power supplying path 44 supplies electric power input through the pair of power terminals 11 and 12, to the occupant detection unit 45.

The coupler 15 is an example of a part that can be coupled with the tongue 2 to be attached to the seat belt 3. The coupler 15 includes an insertion mouth to have, for example, a metal plate of the tongue 2 inserted.

The buckle switch 30 is an example of a coupling detection unit that detects coupling between the tongue 2 and the coupler 15. The buckle switch 30 detects whether the seat belt 3 is fastened, by detecting whether the tongue 2 and the coupler 15 are coupled. The buckle switch 30 detects a state in which the tongue 2 and the coupler 15 are not coupled, as a state in which the seat belt 3 is not fastened (a state of the seat belt 3 being unfastened). On the other hand, the buckle switch 30 detects a state in which the tongue 2 and the coupler 15 are coupled, as a state in which the seat belt 3 is fastened (a state of the seat belt 3 being fastened).

In a state in which the seat belt 3 being unfastened is detected, the buckle switch 30 permits supplying power from the pair of power terminals 11 and 12 to the occupant detection unit 45. In this example, by making the power supplying path 44 conductive, the buckle switch 30 permits supplying power from the pair of power terminals 11 and 12 to the occupant detection unit 45 in a state of the seat belt 3 being unfastened. On the other hand, in a state in which the seat belt 3 being fastened is detected, the buckle switch 30 inhibits supplying power from the pair of power terminals 11 and 12 to the occupant detection unit 45. In this example, by making the power supplying path 44 cut off, the buckle switch 30 inhibits supplying power from the pair of power terminals 11 and 12 to the occupant detection unit 45 in a state of the seat belt 3 being fastened.

The occupant detection unit 45 is an example of an occupant detection unit that detects an occupant on the seat of the vehicle, without contacting the occupant. The occupant detection unit 45 operates on a power supply voltage Vd relative to the voltage of the minus terminal 12 as a reference. The occupant detection unit 45 is inserted in series on the power supplying path 44, and receives power supply via the power supplying path 44. The occupant detection unit 45 includes, for example, an occupant detection sensor 40 (may be simply referred to as a "sensor 40" below), and an output circuit 46.

The sensor 40 outputs an occupant detection signal 41 that represents a detection result of an occupant on the seat. The sensor 40 outputs the occupant detection signal 41 that represents a detection result including one of, a detected state corresponding to an occupant being detected, and a non-detected state corresponding to an occupant being undetected.

The sensor 40 detects an occupant on a seat of the vehicle, for example, by transmitting and receiving an electromagnetic wave. The sensor 40 transmits an electromagnetic wave towards above the bearing surface of the seat of the vehicle, and receives a reflected wave of the transmitted electromagnetic wave, to detect an occupant on the bearing surface. As a specific example of the electromagnetic wave, a radio wave such as a microwave in an SHF (Super High Frequency) band, an infrared ray having a higher frequency than a radio wave, or the like may be considered. Alternatively, the sensor 40 may detect an occupant on the seat of the vehicle, by change of the electrostatic capacitance between the occupant and a sensor electrode of the sensor 40.

Depending on an occupant detection result included in the occupant detection signal 41, the output circuit 46 changes the current value of a measure current Ia flowing between the pair of power terminals 11 and 12. The output circuit 46 includes, for example, a resistor 42 and a transistor 43. The transistor 43 transitions to an on state or an off state following an occupant detection result included in the occupant detection signal 41. As a specific example of the transistor 43, a bipolar transistor, an electric field effect transistor, or the like may be considered. The base or the gate of the transistor 43 receives the occupant detection signal 41 as input. The collector or the drain of the transistor 43 is connected with the power supplying path 44 via the resistor 42 on the side of the plus terminal 11 with respect to the sensor 40; specifically in this example, connected with the power supplying path 44 via the resistor 42 between the buckle switch 30 and the power terminal of the sensor 40. The emitter or the drain of the transistor 43 is connected with the power supplying path 44 on the side of the minus terminal 12 with respect to the sensor 40; specifically in this example, connected with the power supplying path 44 between the minus terminal 12 and the ground terminal of the sensor 40.

On the other hand, the ECU 20 is an example of an electronic control unit that is connected with the buckle 1A via the pair of power lines 27 and 28. The ECU 20 includes the current output terminal 21, the current input terminal 22, a DC power source 23, a reception resistor 25, and an information receiver unit 26.

The DC power source 23 outputs a drive voltage Va that is constant with respect to ground 24 of the ECU 20 as a reference, to apply the power supply voltage Vd to the pair of power terminals 11 and 12 via the pair of power lines 27 and 28. Representing a voltage generated between both terminals of the reception resistor 25, in which the measure current Ia flows, by a reception voltage Vb, the power supply voltage Vd is strictly a voltage subtracting the reception voltage Vb from the drive voltage Va (Vd=Va-Vb). Since the reception voltage Vb is sufficiently smaller than the drive voltage Va, the power supply voltage Vd is nearly equal to the drive voltage Va.

The information receiver unit 26 receives detection information indicating a state being detected by the buckle 1A, by using the pair of power lines 27 and 28. The information receiver unit 26 identifies content of the detection information transmitted from the buckle 1A, for example, based on change of the voltage value of the reception voltage Vb. The voltage value of the reception voltage Vb changes depending on the current value of the measure current Ia.

The information receiver unit 26 includes, for example, an operational amplifier 51 and a determination part 52. The operational amplifier 51 amplifies the reception voltage Vb, and outputs a measure voltage Vc after the amplification. The determination part 52 identifies the content of the detection information transmitted from the buckle 1A, depending on the voltage value of the measure voltage Vc.

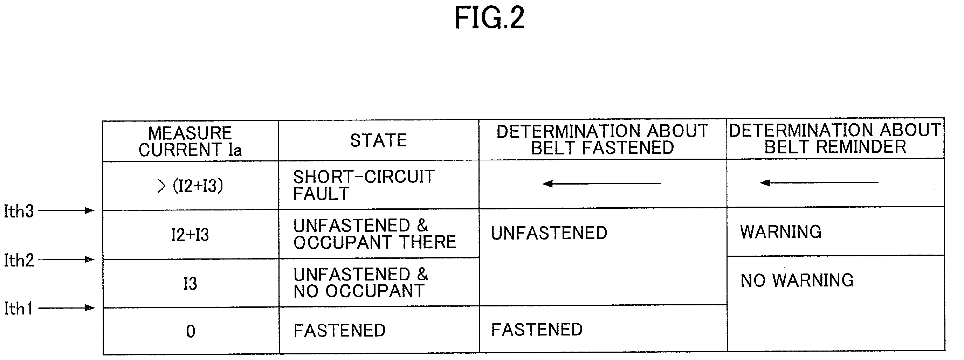

FIG. 2 is a table illustrating an example of a relationship among states detected by the buckle 1A, current values of the measure current Ia flowing in the pair of power terminals 11 and 12, and states determined by the determination part 52 of the ECU 20.

The occupant detection unit 45 changes the current value of the measure current la, between a detected state in which an occupant is detected in a state of the seat belt 3 being unfastened, and a non-detected state in which an occupant is not detected in a state of the seat belt 3 being unfastened. In a state of the seat belt 3 being unfastened, since supplying power from the pair of power terminals 11 and 12 to the occupant detection unit 45 is permitted by the buckle switch 30, an occupant can be detected by the occupant detection unit 45.

The sensor 40 outputs an occupant detection signal 41 that makes the transistor 43 transition to an on state, for example, in a detected state in which an occupant is detected in a state of the seat belt 3 being unfastened. When the transistor 43 has transitioned to an on state, the current value of the measure current Ia becomes the sum of an output current value 12 and a consumed current value 13 (Ia=I2+I3). The output current value 12 represents the current value of a current that flows in the transistor 43 of the output circuit 46 without going through the sensor 40 in an on state of the transistor 43. The consumed current value 13 represents the current value of a current that flows in the sensor 40 without going through the output circuit 46 (the consumed current of the sensor 40).

On the other hand, the sensor 40 outputs an occupant detection signal 41 that makes the transistor 43 transition to an off state, for example, in a non-detected state in which an occupant is not detected in a state of the seat belt 3 being unfastened. When the transistor 43 has transitioned to an off state, the current value of the measure current Ia becomes the consumed current value 13 (Ia=I3).

On the other hand, the buckle switch 30 inhibits supplying power from the pair of power terminals 11 and 12 to the occupant detection unit 45 in a state of the seat belt 3 being fastened, to cut off the power supplying path 44. By having the power supplying path 44 cut off, the current value of the measure current Ia becomes zero (Ia=0). Also, if a short-circuit fault occurs in which a power source harness having a voltage higher than the drive voltage Va, short-circuits with the minus power line 28, the current value of the measure current Ia that flows in the reception resistor 25 increases to be greater than the sum of the output current value 12 and the consumed current value 13 (Ia>I2+I3).

The ECU 20 has settings of multiple current thresholds Ith1, Ith2, and Ith3. The current threshold Ith1 is a current value greater than zero and less than the current value 13. The current threshold Ith2 is a current value greater than the current value 13 and less than the current value (12+13). The current threshold Ith3 is a current value greater than the current value (12+13). For example, the determination part 52 has settings of a voltage threshold Vth1 corresponding to the current threshold Ith1, a voltage threshold Vth2 corresponding to the current threshold Ith2, and a voltage threshold Vth3 corresponding to the current threshold Ith3.

If a measure current Ia less than the current threshold Ith1 is measured, the ECU 20 can determine that the seat belt 3 is fastened. For example, if a measure voltage Vc less than the voltage threshold Vth1 is measured, the determination part 52 can determine that the seat belt 3 is fastened.

If a measure current Ia greater than or equal to the current threshold Ith1 and less than the current threshold Ith2 is measured, the ECU 20 can determine that the seat belt 3 is unfastened and no occupant is there. For example, if a measure voltage Vc greater than or equal to the voltage threshold Vth1 and less than the voltage threshold Vth2 is measured, the determination part 52 can determine that the seat belt 3 is unfastened and no occupant is there.

If a measure current Ia less than the current threshold Ith2 is measured, the ECU 20 can determine that the seat belt 3 is fastened or no occupant is there, and hence, does not issue a warning to prompt an occupant to fasten the seat belt 3. For example, if a measure voltage Vc less than the voltage threshold Vth2 is measured, the determination part 52 does not issue a warning to prompt to fasten the seat belt 3.

If a measure current Ia greater than or equal to the current threshold Ith2 and less than the current threshold Ith3 is measured, the ECU 20 can determine that the seat belt 3 is unfastened and an occupant is there. If having determined that the seat belt 3 is unfastened and an occupant is there, the ECU 20 issues a warning to prompt the occupant to fasten the seat belt 3. For example, if a measure voltage Vc greater than or equal to the voltage threshold Vth2 and less than the voltage threshold Vth3 is measured, the determination part 52 can determine that the seat belt 3 is unfastened and an occupant is there, and hence, issues a warning to prompt the occupant to fasten the seat belt 3. As a specific example of the warning, turning on or blinking a lamp, a warning sound, a warning vibration, or a warning screen display, may be considered.

If a measure current Ia greater than or equal to the current threshold Ith3 is measured, the ECU 20 can determine that a short-circuit fault occurs in the buckle 1A in which the power source harness having a higher voltage than the drive voltage Va, short-circuits with the minus power line 28. If having determined that the short-circuit fault occurs in the buckle 1A, the ECU 20 outputs short-circuit fault occurrence information indicating that the short-circuit fault occurs in the buckle 1A. For example, if a measure voltage Vc greater than or equal to the voltage threshold Vth3 is measured, the determination part 52 can determine that a short-circuit fault occurs in the buckle 1A, and outputs the short-circuit fault occurrence information. Note that output of the short-circuit fault occurrence information may be used as a warning to prompt an occupant to fasten the seat belt 3.

Thus, according to the seat belt reminder system 10A, since supplying power is inhibited from the pair of power terminals 11 and 12 to the occupant detection unit 45 in a state of the seat belt 3 being fastened, the consumed current of the buckle 1A in the state of the seat belt 3 being fastened can be reduced. Also, since the current value of the measure current Ia in a state of the seat belt 3 being fastened (in this example, zero) is lower than the current value of the measure current Ia in a non-detected state of an occupant (in this example, 13), the current value of the consumed current of the buckle 1A can be reduced in the state of the seat belt 3 being fastened (in this example, reduced to zero). Also, the current value of the measure current Ia in a state of the seat belt 3 being fastened (in this example, zero) is different from the current value of the measure current Ia in a non-detected state of an occupant (in this example, 13). Therefore, the ECU 20 can distinguish a state in which the seat belt 3 is fastened, from a state in which the seat belt 3 is unfastened and an occupant is not detected.

Also, the current value of the measure current Ia in a non-detected state of an occupant (in this example, 13) is lower than the current value of the measure current Ia in a detected state of an occupant (in this example, I2+I3). This makes it possible for the ECU 20 to determine whether to issue a warning to prompt an occupant to fasten the seat belt 3 by using the single current threshold Ith2. In other words, this makes it easier to set a threshold for determining whether to issue a warning to prompt an occupant to fasten the seat belt 3.

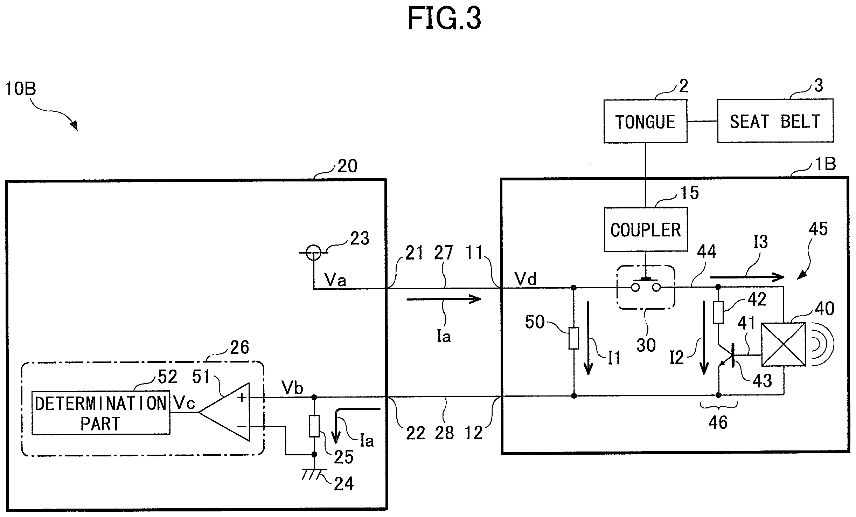

FIG. 3 is a diagram illustrating an example of a configuration of a seat belt reminder system 10B including a buckle 1B and an ECU 20. For elements and effects of the seat belt reminder system 10B that are the same as those in the seat belt reminder system 10A, the above description may be referred to, and may be omitted or simplified here. The seat belt reminder system 10B has a detection resistor 50 in the buckle, which is different from the seat belt reminder system 10A. The buckle 1B has the detection resistor 50 connected between the pair of power terminals 11 and 12. The detection resistor 50 is an element to detect an open fault between the plus terminal 11 and the current output terminal 21 (for example, disconnection of the plus power line 27), or an open fault between the minus terminal 12 and the current input terminal 22 (for example, disconnection of the plus power line 28).

The detection resistor 50 has one terminal connected with the power supplying path 44 between the plus terminal 11 and the buckle switch 30, and the other terminal connected with the power supplying path 44 between the minus terminal 12 and the ground terminal of the sensor 40.

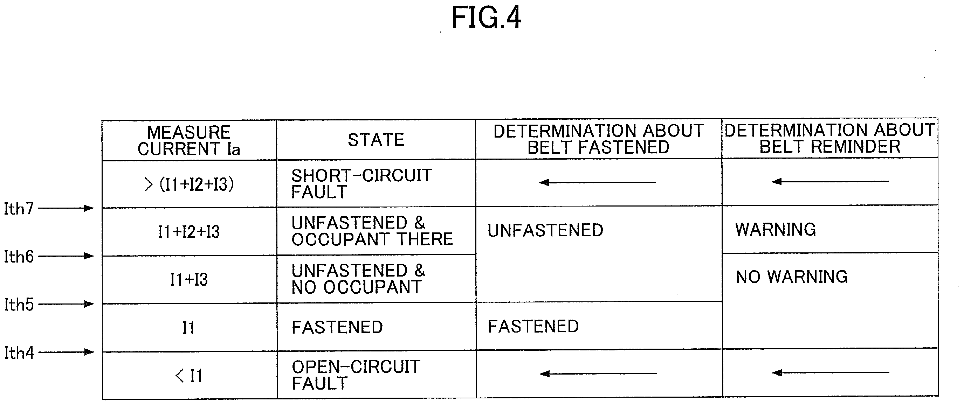

FIG. 4 is a table illustrating an example of a relationship among states detected by the buckle 1B, current values of the measure current Ia flowing in the pair of power terminals 11 and 12, and states determined by the determination part 52 of the ECU 20.

The sensor 40 outputs an occupant detection signal 41 that makes the transistor 43 transition to an on state, for example, in a detected state in which an occupant is detected in a state of the seat belt 3 being unfastened. When the transistor 43 has transitioned to an on state, the current value of the measure current Ia becomes the sum of a detection current value I1, the output current value 12, and the consumed current value 13 (Ia=I1+I2+I3). The detection current value I1 represents the current value of a current that flows in the detection resistor 50.

On the other hand, the sensor 40 outputs an occupant detection signal 41 that makes the transistor 43 transition to an off state, for example, in a non-detected state in which an occupant is not detected in a state of the seat belt 3 being unfastened. When the transistor 43 has transitioned to an off state, the current value of the measure current Ia becomes the sum of the detection current value I1 and the consumed current value 13 (Ia=I1+I3).

On the other hand, the buckle switch 30 inhibits supplying power from the pair of power terminals 11 and 12 to the occupant detection unit 45 in a state of the seat belt 3 being fastened, to cut off the power supplying path 44. By having the power supplying path 44 cut off, the current value of the measure current Ia becomes the detection current value I1 (Ia=I1). Also, if a short-circuit fault occurs in which a power source harness having a voltage higher than the drive voltage Va, short-circuits with the minus power line 28, the current value of the measure current Ia that flows in the reception resistor 25 increases to be greater than the sum of the detection current value I1, the output current value 12, and the consumed current value 13 (Ia>I1+I2+I3). Also, if an open fault occurs between the plus terminal 11 and the current output terminal 21, or between the minus terminal 12 and the current input terminal 22, the current value of the measure current Ia becomes zero (Ia=0).

The ECU 20 has settings of multiple current thresholds Ith4, Ith5, Ith6, and Ith7. The current threshold Ith4 is a current value greater than zero and less than the current value I1. The current threshold Ith5 is a current value greater than the current value I1 and less than the current value (I1+I3). The current threshold Ith6 is a current value greater than the current value (I1+I3) and less than the current value (11+12+13). The current threshold Ith7 is a current value greater than the current value (11+12+13). For example, the determination part 52 has settings of a voltage threshold Vth4 corresponding to the current threshold Ith4, a voltage threshold Vth5 corresponding to the current threshold Ith5, a voltage threshold Vth6 corresponding to the current threshold Ith6, and a voltage threshold Vth7 corresponding to the current threshold Ith7.

If a measure current Ia less than the current threshold Ith4 is measured, the ECU 20 can determine that an open fault occurs between the ECU 20 and the buckle 1B. If having determined that an open fault occurs between the ECU 20 and the buckle 1B, the ECU 20 outputs open fault occurrence information indicating that the open fault occurs between the ECU 20 and the buckle 1B. For example, if a measure voltage Vc less than the voltage threshold Vth4 is measured, the determination part 52 can determine that the open fault occurs between the ECU 20 and the buckle 1B, and hence, outputs the open fault occurrence information.

If a measure current Ia greater than or equal to the current threshold Ith4 and less than the current threshold Ith5 is measured, the ECU 20 can determine that the seat belt 3 is fastened. For example, if a measure voltage Vc greater than or equal to the voltage threshold Vth4 and less than the voltage threshold Vth5 is measured, the determination part 52 can determine that the seat belt 3 is fastened.

If a measure current Ia greater than or equal to the current threshold Ith5 and less than the current threshold Ith6 is measured, the ECU 20 can determine that the seat belt 3 is unfastened and no occupant is there. For example, if a measure voltage Vc greater than or equal to the voltage threshold Vth5 and less than the voltage threshold Vth6 is measured, the determination part 52 can determine that the seat belt 3 is unfastened and no occupant is there.

If a measure current Ia greater than or equal to the current threshold Ith4 and less than the current threshold Ith6 is measured, the ECU 20 can determine that the seat belt 3 is fastened or no occupant is there, and hence, does not issue a warning to prompt an occupant to fasten the seat belt 3. For example, if a measure voltage Vc greater than or equal to the voltage threshold Vth4 and less than the voltage threshold Vth6 is measured, the determination part 52 does not issue a warning to prompt to fasten the seat belt 3.

If a measure current Ia greater than or equal to the current threshold Ith6 and less than the current threshold Ith7 is measured, the ECU 20 can determine that the seat belt 3 is unfastened and an occupant is there. If having determined that the seat belt 3 is unfastened and an occupant is there, the ECU 20 issues a warning to prompt the occupant to fasten the seat belt 3. For example, if a measure voltage Vc greater than or equal to the voltage threshold Vth6 and less than the voltage threshold Vth7 is measured, the determination part 52 can determine that the seat belt 3 is unfastened and an occupant is there, and hence, issues a warning to prompt the occupant to fasten the seat belt 3. As a specific example of the warning, turning on or blinking a lamp, a warning sound, a warning vibration, or a warning screen display, may be considered.

If a measure current Ia greater than or equal to the current threshold Ith7 is measured, the ECU 20 can determine that a short-circuit fault occurs in the buckle 1B in which the power source harness having a higher voltage than the drive voltage Va, short-circuits with the minus power line 28. If having determined that the short-circuit fault occurs in the buckle 1B, the ECU 20 outputs short-circuit fault occurrence information indicating that the short-circuit fault occurs in the buckle 1B. For example, if a measure voltage Vc greater than or equal to the voltage threshold Vth7 is measured, the determination part 52 can determine that a short-circuit fault occurs in the buckle 1B, and outputs the short-circuit fault occurrence information. Note that output of the short-circuit fault occurrence information may be used as a warning to prompt an occupant to fasten the seat belt 3.

Thus, according to the seat belt reminder system 10B, since supplying power is inhibited from the pair of power terminals 11 and 12 to the occupant detection unit 45 in a state of the seat belt 3 being fastened, the consumed current of the buckle 1B in the state of the seat belt 3 being fastened can be reduced. Also, since the current value of the measure current Ia in a state of the seat belt 3 being fastened (in this example, I1) is lower than the current value of the measure current Ia in a non-detected state of an occupant (in this example, I1+I3), the current value of the consumed current of the buckle 1A can be reduced in the state of the seat belt 3 being fastened (in this example, reduced to I1). Also, the current value of the measure current Ia in a state of the seat belt 3 being fastened (in this example, I1) is different from the current value of the measure current Ia in a non-detected state of an occupant (in this example, 11+13). Therefore, the ECU 20 can distinguish a state in which the seat belt 3 is fastened, from a state in which the seat belt 3 is unfastened and an occupant is not detected.

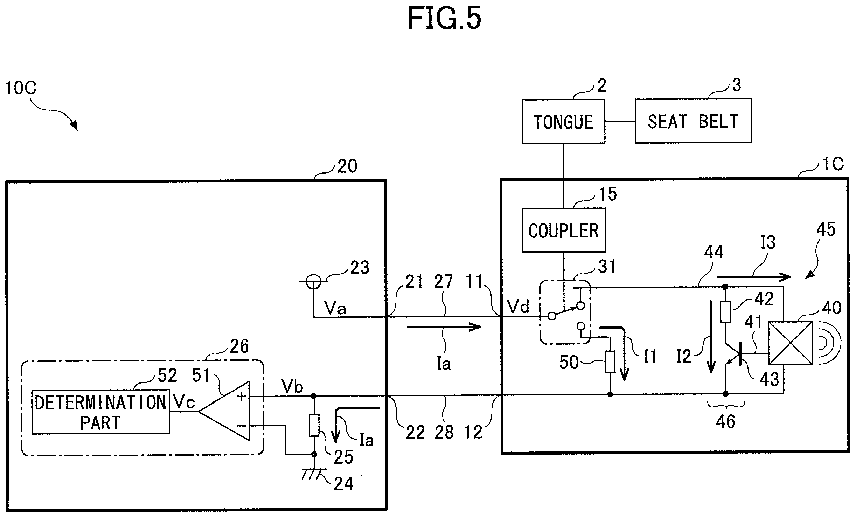

FIG. 5 is a diagram illustrating an example of a configuration of a seat belt reminder system 10C including a buckle 1C and an ECU 20. For elements and effects of the seat belt reminder system 10C that are the same as those in the seat belt reminder system 10B, the above description may be referred to, and may be omitted or simplified here. The seat belt reminder system 10C has a configuration of the buckle switch that is different from that in the seat belt reminder system 10B. The buckle switch 31 of the buckle 1C permits supplying power from the pair of power terminals 11 and 12 to the occupant detection unit 45 in a state of the seat belt 3 being unfastened, and inhibits supplying power from the pair of power terminals 11 and 12 to the occupant detection unit 45 in a state of the seat belt 3 being fastened. The buckle switch 31 has a configuration in which the connection destination of the plus terminal 11 is switched to one of the plus terminal of the occupant detection unit 45 and the detection resistor 50.

So far, the buckle and the in-vehicle system have been described with the embodiments. Note that the present invention is not limited to the above embodiments. Various modifications and improvements can be made within the scope of the present invention, by combining and/or replacing a part of or all of the embodiments with the others.

For example, the buckle switch 30 in FIG. 1 and FIG. 3, or the buckle switch 31 in FIG. 5 may be inserted on the power supplying path 44 in series between the minus terminal 12 and the minus terminal of the occupant detection unit 45.

Also, for example, the sensor 40 may output an occupant detection signal 41 that makes the transistor 43 transition to an off state in a detected state in which an occupant is detected in a state of the seat belt 3 being unfastened, and may output an occupant detection signal 41 that makes the transistor 43 transition to an on state, in a non-detected state in which an occupant is not detected in a state of the seat belt 3 being unfastened.

## Claims

1. A buckle (1A) comprising:
a pair of power terminals (11, 12);
an occupant detection unit (45) configured to detect an occupant on a seat of a vehicle; and
a switch (30) configured to permit supplying power from the power terminals (11, 12) to the occupant detection unit (45) in an unfastened state of a seat belt (3) of the vehicle,
wherein the occupant detection unit (45) changes a current value of a current (Ia) that flows in the power terminals (11, 12), between a detected state in which the occupant is detected in the unfastened state, and a non-detected state in which the occupant is not detected in the unfastened state,
wherein the switch (30) inhibits supplying power from the power terminals (11, 12) to the occupant detection unit (45) in a fastened state of the seat belt, to make the current value in the fastened state lower than the current value in the detected state, in which the occupant is detected in the unfastened state, and lower than the current value in the non-detected state, in which the occupant is not detected in the unfastened state.

2. The buckle (1A) as claimed in claim 1, wherein the current value in the non-detected state is lower than the current value in the detected state.

3. The buckle (1B) as claimed in claim 1 or 2, further comprising:
a resistor (50) connected between the pair of power terminals (11, 12).

4. An in-vehicle system (10A, 10B, or 10C), comprising:
the buckle (1A, 1B, or 1C) as claimed in any one of claims 1 to 3; and
an electronic control unit (20) connected with the buckle (1A, 1B, or 1C) via a pair of power lines (27, 28), the electronic control unit (20) including
a DC power source (23) configured to apply a power supply voltage to the pair of power terminals (11, 12) via the power lines (27, 28), and
a receiver unit (26) configured to receive information being detected by the buckle (1A, 1B, or 1C), by measuring the current value.

## Patentansprüche

1. Schnalle (1A) umfassend:
ein Paar Spannungsanschlüsse (11, 12);
eine Insassenerfassungseinheit (45), welche ausgestaltet ist, um einen Insassen auf einem Sitz eines Fahrzeugs zu erfassen; und
einen Schalter (30), welcher ausgestaltet ist, um ein Zuführen von Leistung von den Spannungsanschlüssen (11, 12) zu der Insassenerfassungseinheit (45) in einem unbefestigten Zustand eines Sitzgurtes (3) des Fahrzeugs zu ermöglichen,
wobei die Insassenerfassungseinheit (45) einen Stromwert eines Stroms (la), welcher in den Spannungsanschlüssen (11, 12) fließt, zwischen einem erfassten Zustand, in welchem der Insasse in dem unbefestigten Zustand erfasst wird, und einem nicht erfassten Zustand, in welchem der Insasse in dem unbefestigten Zustand nicht erfasst wird, ändert,
wobei der Schalter (30) ein Zuführen von Leistung von den Spannungsanschlüssen (11, 12) zu der Insassenerfassungseinheit (45) in einem befestigten Zustand des Sitzgurtes verhindert, um den Stromwert in dem befestigten Zustand niedriger als den Stromwert in dem erfassten Zustand, in welchem der Insasse in dem unbefestigten Zustand erfasst wird, und niedriger als den Stromwert in dem nicht erfassten Zustand, in welchem der Insasse nicht in dem unbefestigten Zustand erfasst wird, zu bilden.

2. Schnalle (1A) nach Anspruch 1, wobei der Stromwert in dem nicht erfassten Zustand niedriger als der Stromwert in dem erfassten Zustand ist.

3. Schnalle (1B) nach Anspruch 1 oder 2, darüber hinaus umfassend:
einen Widerstand (50), welcher zwischen dem Paar Spannungsanschlüssen (11, 12) verbunden ist.

4. Fahrzeugsystem (10A, 10B oder 10C) umfassend:
die Schnalle (1A, 1B oder 1C) nach einem der Ansprüche 1 bis 3; und
eine elektronische Steuereinheit (20), welche mittels eines Paars Spannungsleitungen (27, 28) mit der Schnalle (1A, 1B oder 1C) verbunden ist, wobei die elektronische Steuereinheit (20) aufweist
eine Gleichspannungsquelle (23), welche ausgestaltet ist, um eine Versorgungsspannung an das Paar Spannungsanschlüsse (11, 12) mittels der Spannungsleitungen (27, 28) anzulegen,
eine Empfangseinheit (26), welche ausgestaltet ist, um eine Information, welche durch die Schnalle (1A, 1B oder 1C) erfasst wird, zu empfangen, indem der Stromwert gemessen wird.

## Revendications

1. Boucle (1A) comprenant :
une paire de bornes d'alimentation (11, 12) ;
une unité de détection de passager (45) configurée pour détecter un passager sur un siège d'un véhicule ; et
un commutateur (30) configuré pour autoriser l'alimentation électrique de l'unité de détection de passager (45) depuis les bornes d'alimentation (11, 12) dans un état détaché d'une ceinture de sécurité (3) du véhicule,
dans laquelle l'unité de détection de passager (45) modifie une valeur de courant d'un courant (la) qui circule dans les bornes d'alimentation (11, 12), entre un état détecté dans lequel le passager est détecté à l'état détaché, et un état non détecté dans lequel le passager n'est pas détecté à l'état détaché,
dans laquelle le commutateur (30) empêche l'alimentation électrique de l'unité de détection de passager (45) depuis les bornes d'alimentation (11, 12) dans un état attaché de la ceinture de sécurité, pour rendre la valeur de courant à l'état attaché inférieure à la valeur de courant à l'état détecté, dans lequel le passager est détecté à l'état détaché, et inférieure à la valeur de courant à l'état non détecté, dans lequel le passager n'est pas détecté à l'état détaché.

2. Boucle (1A) selon la revendication 1,
dans laquelle la valeur de courant à l'état non détecté est inférieure à la valeur de courant à l'état détecté.

3. Boucle (1B) selon la revendication 1 ou 2, comprenant en outre :
une résistance (50) connectée entre la paire de bornes d'alimentation (11, 12).

4. Système embarqué (10A, 10B, ou 10C), comprenant :
la boucle (1A, 1B ou 1C) selon l'une quelconque des revendications 1 à 3 ; et
un boîtier de commande électronique (20) connecté à la boucle (1A, 1B ou 1C) par l'intermédiaire d'une paire de lignes d'alimentation (27, 28), le boîtier de commande électronique (20) comportant
une source d'alimentation en courant continu (23) configurée pour appliquer une tension d'alimentation à la paire de bornes d'alimentation (11, 12) par l'intermédiaire des lignes d'alimentation (27, 28), et
une unité réceptrice (26) configurée pour recevoir des informations détectées par la boucle (1A, 1B ou 1C), en mesurant la valeur de courant.
